# EUROPÄISCHE PATENTANMELDUNG

(11) **EP 2 886 822 A1**
(43) Veröffentlichungstag der Anmeldung: **24.06.2015**
(21) Anmeldenummer: 14003914.0
(22) Anmeldetag: 20.11.2014
(51) Int. Cl.: F01P 7/16

(54) **Kühlwassersteuerung**

(30) Priorität: 18.12.2013 DE 102013021090
(71) Anmelder: DEUTZ Aktiengesellschaft, 51149 Köln (DE)
(72) Erfinder: Kurt, Tobias, 41542 Dormagen (DE); Knaps, Gerhard, 53844 Troisdorf (DE)

(57) **Zusammenfassung**

Kühlkreislauf für ein Kraftfahrzeug, mit einem Verbrennungsmotor; einer Pumpvorrichtung zum Pumpen eines Kühlmittels durch den Verbrennungsmotor; einem Kühler, der zwischen der Auslassseite und der Einlassseite des Verbrennungsmotors angeordnet ist, zum Kühlen des Kühlmittels; einer Kühler-Bypassleitung (kurzer Kreis 6, welche die Auslassseite unter Umgehung des Kühlers direkt mit der Einlassseite des Verbrennungsmotors verbindet; und wenigstens einer Steuerwalze (1), die zum wahlweisen Öffnen und Schließen der Kühler-Bypassleitung (kurzer Kreis 6, langer Kreis 5) angeordnet ist, wobei der Kühlkreislauf ferner aufweist: eine Verbrennungsmotor-Bypassleitung, welche die Auslassseite des Kühlers unter Umgehung des Verbrennungsmotors als kurzer Kreis (6) direkt mit der Einlassseite verbindet.

## Beschreibung

Die Erfindung betrifft eine druckverlustoptimierte Kühlwassersteuerung.

Derartige Kühlwassersteuerungen sind bekannt aus der DE 103 29 563 A1. Hier wird ein Verfahren zum Betrieb eines Kühl- und Heizungskreislaufs für Kraftfahrzeuge mit einer durch Kühlmittel gekühlten Brennkraftmaschine, mit einem autarken Thermostatventil, welches zur Kontrolle der Kühlmitteltemperatur den Kühlmitteldurchsatz durch die Brennkraftmaschine und den Fahrzeugkühler regelt und einem von der elektronischen Motorsteuerung beeinflussbaren Bypasszweig mit Zusatzventil, welcher den Kühlmitteldurchsatz durch die Brennkraftmaschine in Abhängigkeit von deren Kühlbedarf zusätzlich variiert, wobei Mittel vorgesehen sind, die den Kühlmitteldurchsatz durch den Heizungswärmetauscherkreislauf, den Entlüftungskreislauf oder sonstige auch bei geschlossenem Thermostaten durchströmte Kühlmittelzweige so stark begrenzen, dass in einer ersten Betriebsart mit einem hohen Kühlmitteldurchsatz durch den Bypasszweig die nominale Thermostatöffnungstemperatur durch die Motorsteuerung einstellbar wird und dass in einer zweiten Betriebsart mit einem reduzierten Kühlmitteldurchsatz durch den Bypasszweig eine aus der Vermischung der einzelnen Teilströme und deren Wärmesenken mit dem geringen Kühlmittelstrom des Bypasszweigs resultierende effektive Thermostatöffnungstemperatur deutlich oberhalb der nominalen Thermostatöffnungstemperatur durch die Motorsteuerung einstellbar wird, wobei in der zweiten Betriebsart zur Minimierung des Kraftstoffverbrauchs in der Teillast die Kühlmittelaustrittstemperaturen aus dem Motor um mehr als 15K über die nominale Thermostatöffnungstemperatur angehoben werden.

Weiter sind derartige Kühlwassersteuerungen aus der EP 2 052 177 B1 bekannt, wobei ein Thermostatventil für eine Verbrennungskraftmaschine, mit einem Gehäuse, das mindestens drei Anschlüsse aufweist, zur Verbindung mit einem Maschinenkühlsystem (Maschinenanschluss), einem Kühler (Kühleranschluss) und einem Bypass (Bypass-Anschluss), einem hohlen kugelförmigen Ventilelement, das um eine Drehachse im Gehäuse zwischen zwei Endstellungen drehbar gelagert ist, wobei das Ventilelement mindestens zwei Öffnungen aufweist, von denen eine ständig mit dem Maschinenanschluss in Verbindung steht und die andere mit ihrer Achse in einer Ebene liegt, die auf der Drehachse im Wesentlichen senkrecht steht und einem von einem Temperaturfühler gesteuerten Antrieb für das Ventilelement, wobei alle Anschlüsse mit ihrer Achse in Ebenen liegen, die annähernd senkrecht auf der Drehachse des Ventilelements stehen, das Ventilelement kugelsegment- oder kugelschalenförmig ist, dessen offene Seite ständig mit dem Maschinenanschluss verbunden ist, das Ventilelement mindestens einen Durchbruch aufweist, der in der einen Endstellung vom Kühleranschluss getrennt ist und in der anderen Endstellung dem Kühleranschluss zugekehrt ist, im Bereich des Kühleranschlusses eine an die Kugelform angepasste Dichtungsanordnung vorgesehen ist und der Antrieb exzentrisch zu Drehachse an dem Ventilelement angreift.

Die DE 32 26 883 A1 offenbart einen Kühlkreislauf für Verbrennungskraftmaschinen, insbesondere für Schiffsdiesel, wobei die den Verbrennungsräumen der Verbrennungskraftmaschine zuzuführende Luft über einen Abgasturbolader angesaugt, verdichtet und durch mindestens einen im Kühlkreislauf angeordneten Wärmetauscher geleitet wird, wobei der Kühler der Verbrennungskraftmaschine und der Wärmetauscher für die Ladeluft derart in dem geschlossenen Kühlkreislauf angeordnet sind, dass im Vollastbetrieb ein größerer Anteil des vom Kühler kommenden Kühlmittels den Wärmetauscher durchströmt als im Teillastbereich.

Zur Zeit werden in Verbrennungsmotoren zur Steuerung des Kühlwassers (Öffnen des großen Wasserkreises - über den Hauptwasserkühler) verschiedene Formen von Thermostaten für die Regelung verwendet, z. B. Doppelthermostate in Tellerform. Das heißt, erreicht das Kühlwasser eine gewünschte Temperatur - in der Regel ca. 90°C - gelangen die so genannten Dehnwachselemente an den Öffnungspunkt und beginnen die Teller in Richtung X zu bewegen. Von diesem Zeitpunkt an wird durch die Abwärtsbewegung des oberen Tellers der große Wasserkreis geöffnet und in gleichem Zuge der Kurzschluss-Kreis durch den unteren Teller verschlossen. Somit wird das Kühlwasser über den Hauptwasserkühler geleitet und gekühlt.

Der Hauptnachteil der bisherigen Lösungen besteht darin, das durch den effektiv durchströmten Querschnitt, welcher bedingt durch die Bauform jeweils relativ gering ausfällt, die Thermostate einen Hauptteil des entstehenden Wasserkreisdruckverlustes verursachen. Dieser erhöhte Druckverlust muss entsprechend durch die Wasserpumpe kompensiert werden, was wiederum eine erhöhte Wasserpumpenleistung und damit erhöhten Kraftstoffverbrauch mit sich zieht.

Aufgabe der vorliegenden Erfindung ist es, die oben genannten Nachteile zu vermeiden und eine Kühlwassersteuerung zu schaffen, die Druckverluste weitgehend vermeidet bzw. auf ein Minimum zu reduzieren.

Die Aufgabe der vorliegenden Erfindung wird durch einen Kühlkreislauf für ein Kraftfahrzeug mit einem Verbrennungsmotor; einer Pumpvorrichtung zum Pumpen eines Kühlmittels durch den Verbrennungsmotor; einem Kühler, der zwischen der Auslassseite und der Einlassseite des Verbrennungsmotors angeordnet ist, zum Kühlen des Kühlmittels; einer Kühler-Bypassleitung, welche die Auslassseite unter Umgehung des Kühlers direkt mit der Einlassseite des Verbrennungsmotors verbindet; und einer ersten Steuerwalze, die zum wahlweisen Öffnen und Schließen der Kühler-Bypassleitung - durch Realisierung eines kurzen Kreises, bzw. eines langen Kreises angeordnet ist, wobei der Kühlkreislauf ferner aufweist: eine Verbrennungsmotor-Bypassleitung, welche die Auslassseite des Kühlers unter Umgehung des Verbrennungsmotors direkt mit der Einlassseite verbindet; und das zum wahlweisen Öffnen und Schließen der Verbrennungsmotor-Bypassleitung angeordnet ist, gelöst.

Weiter ist vorteilhafterweise vorgesehen, dass die Steuerwalze aus Kunststoff gefertigt ist, was sie preiswert und zuverlässig macht.

Die Aufgabenstellung dieser Erfindungsmeldung besteht darin, den Druckverlust der Kühlwassersteuerung zu minimieren.

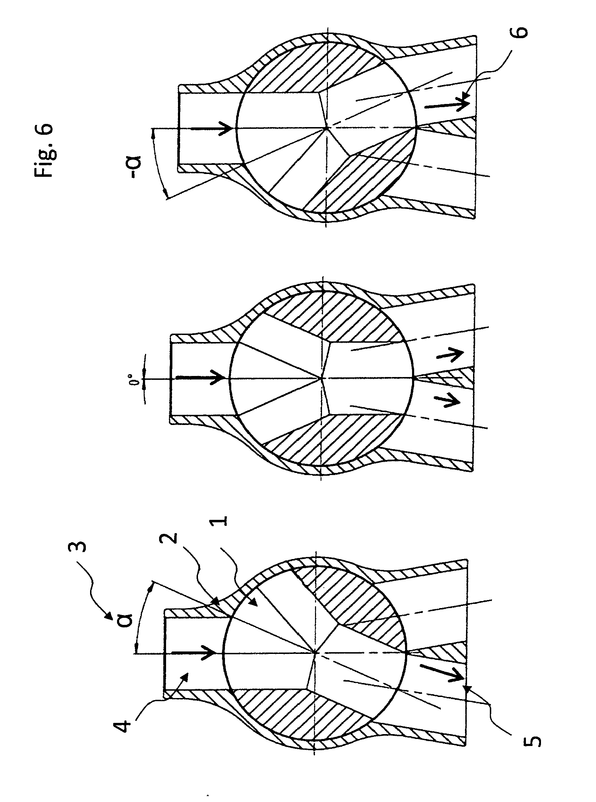

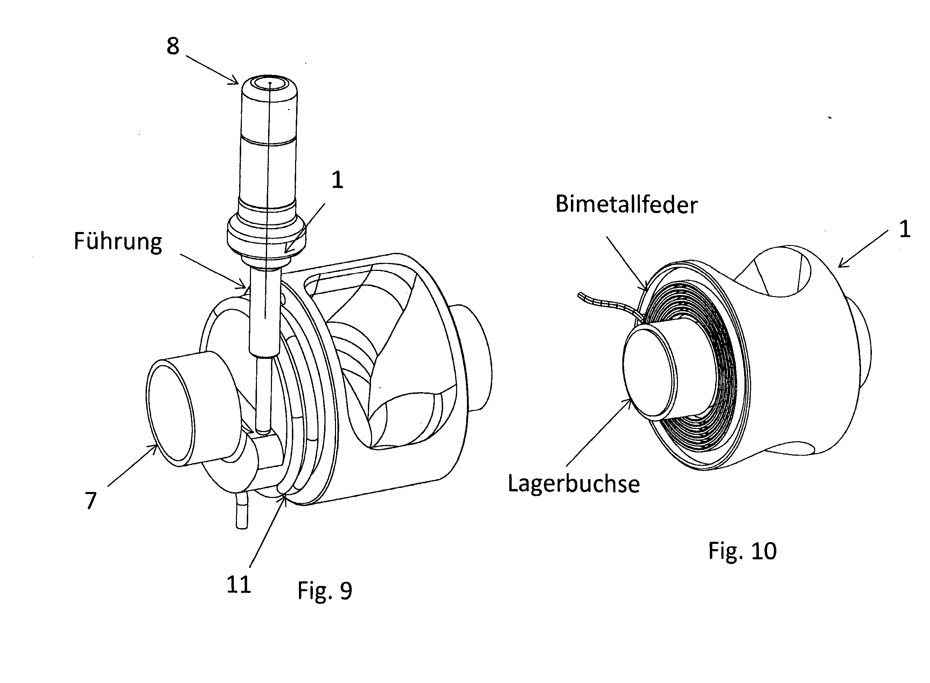

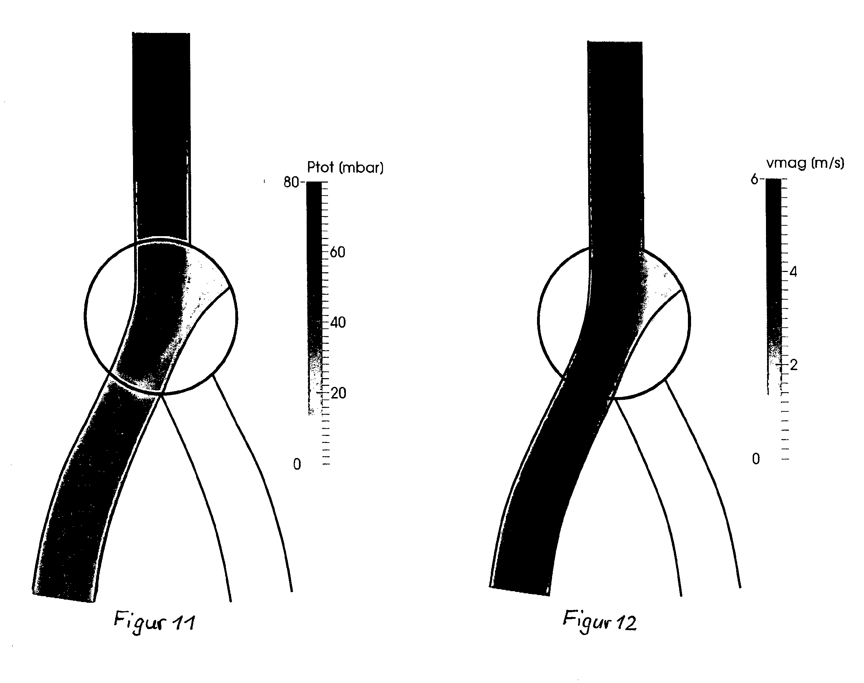

Für die Steuerung wird der vom Kühlwasser effektiv durchströmte Querschnitt nur so geringfügig wie möglich reduziert, die grundsätzliche Durchströmrichtung wird beibehalten. Figur 6 zeigt die grundsätzliche Funktionsweise der druckverlustoptimierten Kühlwassersteuerung. Die Durchströmrichtung ist hierbei jeweils mit Pfeilen gekennzeichnet. Das Kühlwasser gelangt vom Motor in das "Thermostat"-Gehäuse und wird dann mit Hilfe einer Steuerwalze dem gewünschten Kühlwasserpfad zugeführt (Rotationsachse der Steuerwalze senkrecht zur Abbildung). Der Hauptvorteil der hier beschriebenen Bauform besteht darin, dass zum Einen der effektiv durchströmte Querschnitt nicht reduziert wird und zum Anderen die Durchströmrichtung nur eine geringfügige Änderung erfährt. Die daraus resultierenden Druckverluste befinden sich (wie in Figur 11 zu sehen) auf einem sehr niedrigen Niveau. Grund dafür ist die sehr homogene Geschwindigkeitsverteilung, die aufgrund des sehr gleichmäßigen durchströmten Querschnittes erzielt wird und in Figur 12 dargestellt wird. Eine Abschätzung z. B. mittels 1D-Simulation hat ergeben, dass die Verwendung der druckverlustoptimierten Kühlwassersteuerung im Falle eines Beispielmotors mit etwa 7 - 8 Litern Hubraum eine Reduzierung der Wasserpumpenleistung von 4.8 auf 2.8 kW bewirken würde. Die Regelung bzw. der Antrieb der Steuerwalze geschieht geregelt, entweder elektrisch, mittels eines Stellmotors, oder mit Hilfe eines(r) Wachsdehnelementes/Bimetallfeder, wie dies in den Figuren 9 und 10 gezeigt wird.

Eine geregelte Variante ließe sich auch mittels Zuheizung des Wachsdehnelementes/Bimetalls realisieren.

Es zeigen:
- Figur 1: ein Zusammenbaumodul mit integriertem Wachsdehnelement
- Figur 2: Ausführung am Verbrennungsmotor: Integration der Komponenten direkt am Kopf oder Block als Modul
- Figur 3: Steuerwalze aus dem Modul nach Figur 2
- Figur 4: Strömungsverläufe im Modul nach Figur 1
- Figur 5: eine Draufsicht des Moduls aus Figur 2
- Figur 6: drei Stellungen der Steuerwalze im Zusammenbaumodul aus Figur 1
- Figur 7: die druckverlustoptimierten Kühlwasserströme im Zusammenbaumodul aus Figur 1
- Figur 8: Detailansichten aus Figur 7
- Figur 9: die Steuerwalze aus Figur 3 mit Dehnelement
- Figur 10: die Steuerwalze aus Figur 8 mit Bimetallfeder statt Dehnelement
- Figur 11: die niedrigen Druckverluste in und um die Steuerwalze aus Figur 6
- Figur 12: die homogene Geschwindigkeitsverteilung in und um die Steuerwalze aus Figur 6
- Figur 13: zeigt Druckverluste eines Doppelthermostates gemäß dem Stand der Technik in mbar

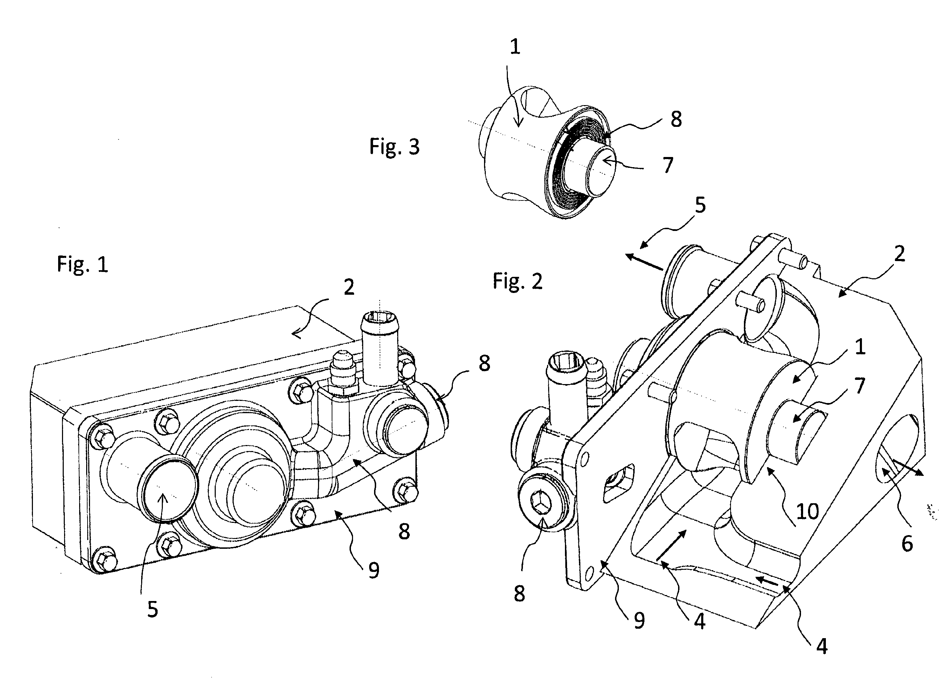

In Figur 1 wird ein Zusammenbaumodul mit integriertem Wachsdehnelement 8 mit Austrittsgehäuse 9 mit montiertem Steuerzulauf, Dichtungen und Lager sowie Entlüftung, Temperatursensor und Heizungsanschluss dargestellt. Der Austritt des kurzen Kreises ist in dieser Darstellung nicht zu sehen, da er vom Zylinderkopf bzw. vom Zylinderblock 2 verdeckt wird. Auf der linken Vorderseite des Austrittsgehäuses 9 ist der Austritt des Hauptkühlkreislaufs 5 zu sehen.

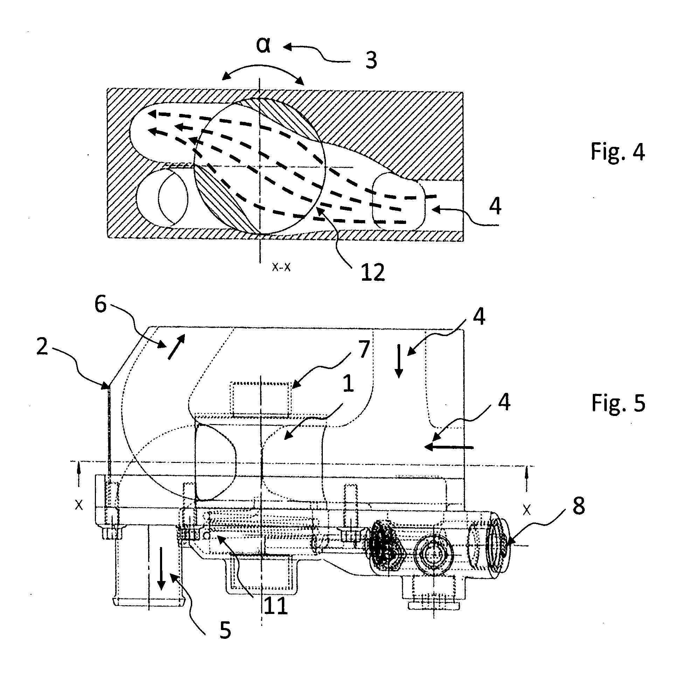

Figur 2 zeigt das Zusammenbaumodul aus Figur 1, wobei die Steuerwalze 1 zu sehen ist, wie sie mittels Lager 7 im Zylinderkopf oder Zylinderblock 2 der Brennkraftmaschine auf ihrer einen Seite gelagert ist. Die dem Lager 7 gegenüberliegende Seite der Steuerwalze 1 ist im Austrittgehäuses 9 des Zusammenbaumoduls gelagert, was man auch in Figur 1 erkennen kann. Die Steuerwalze 1 wird in ihrer Lagerstatt um einen Drehwinkel 3, der zwischen 0° und 50° liegt, bewegt, was besonders anschaulich in Figur 6 offenbart wird. Der Weg des Kühlmittels aus dem Verbrennungsmotor erfolgt über den Eintritt vom Block und Kopf 4 hin zur Steuerwalze 1. Die Steuerwalze 1 leitet das Kühlmittel dann in Abhängigkeit des Drehwinkels 3 entweder zum Austritt 5 (Hauptkreis) oder zum Austritt 6 (kurzer Kreis). Die Weiterleitung des Kühlmittels sowohl zum Austritt 5 (Hauptkreis) oder zum Austritt 6 (kurzer Kreis) ist ebenfalls möglich, wie man beispielsweise in Figur 6 in der mittleren Darstellung sehen kann. Die Lagerstelle für das Lager 7 wird aus dem Vollmaterial des Zylinderkopfs oder des Zylinderblocks 2 z. B. spanend oder mit anderen anerkannten Fertigungsmethoden der mechanischen Bearbeitung im Motorgehäuse 10 erzeugt. Die Ansteuerung der Steuerwalze 1 erfolgt beispielsweise über ein Dehnelement 8, das auch elektrisch beheizbar sein kann - oder eine Bimetallfeder aus Formgedächtnismaterial, die auch elektrisch beheizbar sein kann. Die Vorderseite des Zusammenbaumoduls besteht im Wesentlichen aus dem Austrittsgehäuse 9, das auf den Zylinderkopf bzw. den Zylinderblock 2 aufgesetzt bzw. aufgeschraubt ist und in Figur 2 von hinten zu sehen ist. Die Rückstellfeder oder Ansteuerung 11 der Steuerwalze 1 ist in etwa konzentrisch um eines der Lager 7 herum angeordnet. Der Strömungsverlauf bei geöffnetem Hauptkreislauf 12 ist ansatzweise in Figur 2, besonders deutlich in Figur 4 zu sehen.

Figur 2 zeigt das Zusammenbaumodul mit integriertem Wachsdehnelement 8 aus Figur 1 mit Austrittsgehäuse 9 mit montiertem Steuerzulauf, Dichtungen und Lager sowie Entlüftung, Temperatursensor und Heizungsanschluss aus der rückseitigen Sicht, wie es in den Zylinderkopf bzw. vom Zylinderblock 2 integriert ist. Der Austritt des kurzen Kreises 6 ist in dieser Darstellung besonders gut zu sehen. Auf der linken Vorderseite des Austrittsgehäuses 9 ist der Austritt des Hauptkühlkreislaufs 5 zu sehen. Die Steuerwalze 1 wird gezeigt, wie sie mittels Lager 7 im Zylinderkopf oder Zylinderblock 2 der Brennkraftmaschine auf ihrer einen Seite gelagert ist. Die dem Lager 7 gegenüberliegende Seite der Steuerwalze 1 ist im Austrittgehäuses 9 des Zusammenbaumoduls gelagert, was man auch in Figur 1 erkennen kann. Die Steuerwalze 1 wird in ihrer Lagerstatt um einen Drehwinkel 3(α), der zwischen 0° und 50° liegt, bewegt, was auch in Figur 6 offenbart wird. Der Weg des Kühlmittels aus dem Verbrennungsmotor erfolgt über den Eintritt vom Block und Kopf 4 hin zur Steuerwalze 1. Die Steuerwalze 1 leitet das Kühlmittel dann in Abhängigkeit des Drehwinkels 3(α) entweder zum Austritt 5 (Hauptkreis) oder zum Austritt 6 (kurzer Kreis). Die Weiterleitung des Kühlmittels sowohl zum Austritt 5 (Hauptkreis) oder zum Austritt 6 (kurzer Kreis) ist ebenfalls möglich, wie dies in Figur 6 in der mittleren Darstellung zu sehen ist. Die Lagerstelle für das Lager 7 wird aus dem Vollmaterial des Zylinderkopfs oder des Zylinderblocks 2 z. B. spanend oder mit anderen anerkannten Fertigungsmethoden der mechanischen Bearbeitung im Motorgehäuse 10 erzeugt. Die Ansteuerung der Steuerwalze 1 erfolgt beispielsweise über ein Dehnelement 8, das auch elektrisch beheizbar sein kann - oder eine Bimetallfeder aus Formgedächtnismaterial, die ebenfalls elektrisch beheizbar sein kann. Die Vorderseite des Zusammenbaumoduls besteht im Wesentlichen aus dem Austrittsgehäuse 9, das auf den Zylinderkopf bzw. den Zylinderblock 2 aufgesetzt bzw. aufgeschraubt ist und in Figur 2 von hinten zu sehen ist. Die Rückstellfeder oder Ansteuerung 11 der Steuerwalze 1 ist in etwa konzentrisch um eines der Lager 7 herum angeordnet und hier nicht zu sehen, da sie von der Steuerwalze 1 verdeckt wird. Der Strömungsverlauf bei geöffnetem Hauptkreislauf 12 ist ansatzweise in Figur 2, besonders deutlich in Figur 4 zu sehen. Die Steuerwalze 1 ist insbesondere aus Metall gefertigt, hierbei sind insbesondere Aluminium, Magnesium oder Messing vorgesehen. In einer alternativen Ausgestaltung ist die Steuerwalze 1 aus Kunststoff hergestellt. Eine gewichtsoptimierte Version der Steuerwalze sieht vor, dass sie aus Kohlefaserwerkstoff besteht. Eine weitere alternative Ausgestaltung sieht vor, dass die Steuerwalze 1 aus einem Aluminium-Kohlefaser-Verbundwerkstoff hergestellt ist.

Die Steuerwalze 1 mit Lager 7 und einer Bimetallfeder 8, die konzentrisch um das Lager 7 herum angeordnet ist, wird in Figur 3 dargestellt.

In Figur 4 wird schematisch der Strömungsverlauf bei geöffnetem Hauptkreislauf 12 des mittels des Eintritts Kopf 4 eintretenden Kühlmittels im Zusammenbaumodul dargestellt, wobei die Steuerwalze 1 in der Weise eingestellt ist, die der linken Darstellung in Figur 6 entspricht.

Figur 5 zeigt das Zusammenbaumodul mit integriertem Wachsdehnelement 8 aus Figur 2 mit Austrittsgehäuse 9 mit montiertem Steuerzulauf, Dichtungen und Lager sowie Entlüftung, Temperatursensor und Heizungsanschluss in der Draufsicht, wie es in den Zylinderkopf bzw. vom Zylinderblock 2 integriert ist. Der Austritt des kurzen Kreises 6 ist in dieser Darstellung besonders gut zu sehen. Auf der linken Vorderseite des Austrittsgehäuses 9 ist der Austritt des Hauptkühlkreislaufs 5 zu sehen. Die Steuerwalze 1 wird gezeigt, wie sie mittels Lager 7 im Zylinderkopf oder Zylinderblock 2 der Brennkraftmaschine auf ihrer einen Seite gelagert ist. Die dem Lager 7 gegenüberliegende Seite der Steuerwalze 1 ist im Austrittgehäuse 9 des Zusammenbaumoduls gelagert, was man auch in Figur 1 erkennen kann. Die Steuerwalze 1 wird in ihrer Lagerstatt um einen Drehwinkel 3(α), der zwischen 0° und 50° liegt, bewegt, was auch in Figur 6 offenbart wird. Der Weg des Kühlmittels aus dem Verbrennungsmotor erfolgt über den Eintritt vom Block und Kopf 4 hin zur Steuerwalze 1. Die Steuerwalze 1 leitet das Kühlmittel dann in Abhängigkeit des Drehwinkels 3(α) entweder zum Austritt 5 (Hauptkreis) oder zum Austritt 6 (kurzer Kreis). Die Weiterleitung des Kühlmittels sowohl zum Austritt 5 (Hauptkreis) oder zum Austritt 6 (kurzer Kreis) ist ebenfalls möglich, wie dies in Figur 6 in der mittleren Darstellung zu sehen ist. Die Lagerstelle für das Lager 7 wird aus dem Vollmaterial des Zylinderkopfs oder des Zylinderblocks 2 z. B. spanend oder mit anderen anerkannten Fertigungsmethoden der mechanischen Bearbeitung im Motorgehäuse 10 erzeugt. Die Ansteuerung der Steuerwalze 1 erfolgt beispielsweise über ein Dehnelement 8, das auch elektrisch beheizbar sein kann - oder eine Bimetallfeder aus Formgedächtnismaterial, die ebenfalls elektrisch beheizbar sein kann. Bei Fehlfunktionen der Steuerwalze 1 wird automatisch der Hauptkreislauf, der via Austritt 5 zum Kühler führt, angesteuert. Die Vorderseite des Zusammenbaumoduls besteht im Wesentlichen aus dem Austrittsgehäuse 9, das auf den Zylinderkopf bzw. den Zylinderblock 2 aufgesetzt bzw. aufgeschraubt ist und in Figur 2 von hinten zu sehen ist. Die Rückstellfeder oder Ansteuerung 11 der Steuerwalze 1 ist in etwa konzentrisch um eines der Lager 7 herum angeordnet und hier nicht zu sehen, da sie von der Steuerwalze 1 verdeckt wird. Der Strömungsverlauf bei geöffnetem Hauptkreislauf 12 ist ansatzweise zu erkennen, besonders deutlich jedoch in Figur 4 zu sehen.

Figur 6 zeigt drei Stellungen der Steuerwalze 1 im Zusammenbaumodul aus den Figuren 1 bis 5, wobei in der linken Darstellung die Steuerwalze 1 das Kühlmittel, das über den Eintritt bzw. den Zulauf des Mediums 4 in den Bereich der Steuerwalze 1 gelangt, in den Bereich des Austritts 5, der zum Hauptwasserkühler leitet. Die Steuerwalze 1 befindet sich im Gehäuse, das im Wesentlichen aus dem umhüllenden Material des Zylinderkopfs oder des Zylinderblocks 2 besteht. Die Steuerwalze 1 ist im linken Ausführungsbeispiel um den Drehwinkel 3, α= +25° (im Uhrzeigersinn) ausgelenkt. Im mittleren Ausführungsbeispiel von Figur 6 ist der Drehwinkel 3, α= 0° ausgelenkt und steuert mittels Steuerwalze 1 beide Austritte 5, 6 an. Im rechten Ausführungsbeispiel von Figur 6 ist der Drehwinkel 3, α= -25° (im Gegenuhrzeigersinn) ausgelenkt. Die Steuerwalze 1 leitet in dieser Ausführungsform das Kühlmittel in den Austritt 6 und somit in den kurzen Kreis bzw. den Kurzschluss unter Auslassung des Kühlers. Die Eintrittsöffnung 4 weist etwa den doppelten Querschnitt bezogen auf den Austrittquerschitt 5 auf, der zum Kühler führt. Die Außenkontur der Steuerwalze 1 ist symmetrisch. Die Steuerwalze 1 ist um ihren geometrischen Mittelpunkt drehbar gelagert. In einer alternativen Ausgestaltung ist vorgesehen, dass die Lagerung der Steuerwalze 1 bezüglich ihres Massenmittelpunktes herum erfolgt. Die Innenkontur der Steuerwalze 1 ist frei von Kanten, dies ist z. B. auch in den Figuren 4, 8 und 9 erkennbar.

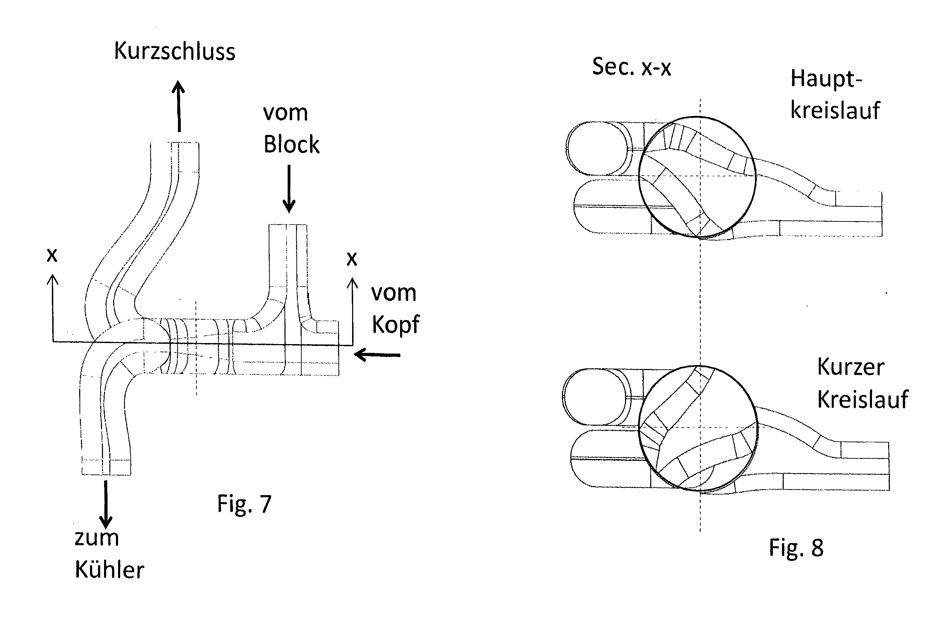

Figur 7 zeigt schematisch die Fließrichtungen des Kühlwassers bzw. die druckverlustoptimierten Kühlwasserströme im Zusammenbaumodul aus Figur 1.

Figur 8 zeigt Detailansichten aus Figur 7, wobei zu erkennen ist, dass der obere Leitungsquerschnitt, der zum Kühler führt, größer und somit mit geringeren Druckverlusten behaftet ist als der untere, da in etwa 95 % der Bertiebszustände dieser Pfad beaufschlagt wird.

In Figur 9 wird die Steuerwalze 1 aus Figur 3 mit Dehnelement 8 und konzentrisch um das Lager 7 herum angeordneter Rückstellfeder 11 dargestellt.

Figur 10 zeigt die Steuerwalze 1 aus Figur 8 mit Bimetallfeder 8 aus Figur 3, anstatt dem Dehnelement aus Figur 9.

Die Figur 11 werden die niedrigen Druckverluste in und um die Steuerwalze 1 aus Figur 6 dargestellt.

In Figur 12 wird die homogene Geschwindigkeitsverteilung in und um die Steuerwalze 1 aus Figur 6 offenbart.

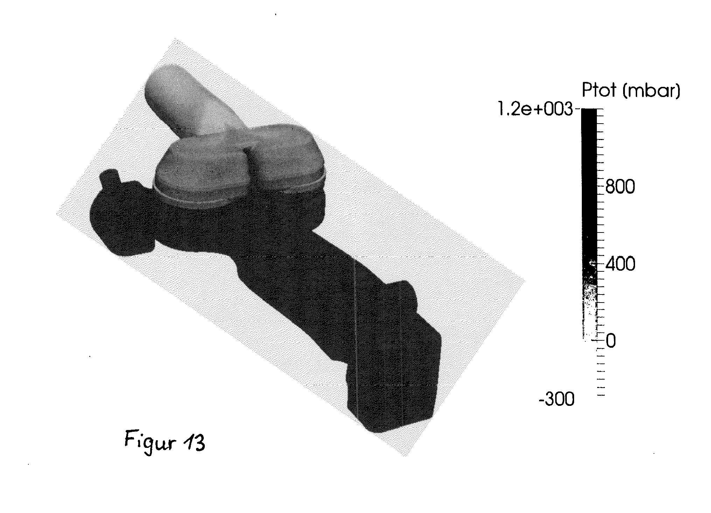

Die Figur 13 zeigt die Druckverluste eines Doppelthermostates gemäß dem Stand der Technik in mbar.

Die beschriebene druckverlustoptimierte Kühlwassersteuerung kann in allen Motoren und Bauformen zum Einsatz kommen. Dabei kann sie nicht nur als Thermostatersatz eingesetzt werden, sondern sie kann auch weitere Steuerfunktionen ausüben. Grundsätzlich kann die druckverlustoptimierte Kühlwassersteuerung das Thermomanagement eines Verbrennungsmotors übernehmen. Weiterhin ist denkbar, dass die druckverlustoptimierte Kühlwassersteuerung als sogenannte "Split-Cooling" Steuerung bei neuentwickelten Motoren das vorrübergehende Abschalten verschiedener Kühlwasserstränge steuert. Ebenfalls denkbar ist die AGR-Steuerung durch ein derartiges Zusammenbaumodul mit Steuerwalze 1, insbesondere im Hinblick auf die Dosierung.

Eine analoge Frischluftsteuerung bzw. Drosselung mittels eines vorher beschriebenen Zusammenbaumoduls mit Steuerwalze 1 ist denkbar.

### Bezugszeichen

- 1: Steuerwalze
- 2: Zylinderkopf oder Zylinderblock
- 3: Drehwinkel ±
- 4: Eintritt vom Block und Kopf
- 5: Austritt (Hauptkreis)
- 6: Austritt (kurzer Kreis)
- 7: Lager
- 8: Ansteuerung über: - Dehnelement (auch elektrisch beheizbar) - Bimetall, Formgedächtnismaterial (auch elektrisch beheizbar)
- 9: Austrittsgehäuse mit Steuerzulauf, Dichtungen und Lager sowie Entlüftung, Temperatursensor
- 10: mechanische Bearbeitung im Motorgehäuse
- 11: Rückstellfeder oder Ansteuerung
- 12: Strömungsverlauf bei geöffnetem Hauptkreislauf

## Patentansprüche

1. Kühlkreislauf für insbesondere ein Kraftfahrzeug, mit einem Verbrennungsmotor; einer Pumpvorrichtung zum Pumpen eines Kühlmittels durch den Verbrennungsmotor; einem Kühler, der zwischen der Auslassseite und der Einlassseite des Verbrennungsmotors angeordnet ist, zum Kühlen des Kühlmittels; einer Kühler-Bypassleitung (kurzer Kreis 6, welche die Auslassseite unter Umgehung des Kühlers direkt mit der Einlassseite des Verbrennungsmotors verbindet; und wenigstens einer Steuerwalze (1), die zum wahlweisen Öffnen und Schließen der Kühler-Bypassleitung (kurzer Kreis 6, langer Kreis 5) angeordnet ist, wobei der Kühlkreislauf ferner aufweist: eine Verbrennungsmotor-Bypassleitung, welche die Auslassseite des Kühlers unter Umgehung des Verbrennungsmotors als kurzer Kreis (6) direkt mit der Einlassseite verbindet.

2. Kühlkreislauf nach Anspruch 1,
**dadurch gekennzeichnet, dass** die Steuerwalze (1) aus Kunststoff gefertigt ist.

3. Kühlkreislauf nach Anspruch 1 oder 2,
**dadurch gekennzeichnet, dass** die Steuerwalze (1) aus Metall gefertigt ist.

4. Kühlkreislauf nach einem der vorhergehenden Ansprüche,
**dadurch gekennzeichnet, dass** die Steuerwalze (1) wenigstens ein Stellelement (8) aufweist.

5. Kühlkreislauf nach einem der vorhergehenden Ansprüche,
**dadurch gekennzeichnet, dass** die Steuerwalze (1) als Stellelement (8) ein Dehnelement, das insbesondere elektrisch beheizbar ist, aufweist.

6. Kühlkreislauf nach einem der vorhergehenden Ansprüche,
**dadurch gekennzeichnet, dass** die Steuerwalze (1) als Stellelement (8) ein insbesondere elektrisch beheizbares Bimetall aufweist.

7. Kühlkreislauf nach einem der vorhergehenden Ansprüche,
**dadurch gekennzeichnet, dass** die Steuerwalze (1) als Stellelement (8) eine Unterdruckdose aufweist.

8. Kühlkreislauf nach einem der vorhergehenden Ansprüche,
**dadurch gekennzeichnet, dass** die Steuerwalze (1) als Stellelement (8) ein pneumatisches oder elektrisches Stellelement ist.

9. Kühlkreislauf nach einem der vorhergehenden Ansprüche,
**dadurch gekennzeichnet, dass** das Kühlmittel Wasser und/oder Öl ist.

10. Kühlkreislauf nach einem der vorhergehenden Ansprüche,
**dadurch gekennzeichnet, dass** die Steuerwalze (1) im oder am Zylinderkopf bzw. am Zylinderblock (2) angeordnet ist.

11. Verfahren zum Steuern eines Kühlkreislaufs für ein Kraftfahrzeug mit einem Verbrennungsmotor; einer Pumpvorrichtung zum Pumpen eines Kühlmittels durch den Verbrennungsmotor, wobei eine Vorrichtung nach einem oder mehreren der vorgenannten Ansprüche zum Einsatz kommt.
